# EUROPÄISCHE PATENTSCHRIFT

(11) **EP 0 866 947 B1**
(45) Veröffentlichungstag und Bekanntmachung des Hinweises auf die Patenterteilung: **11.04.2001**
(21) Anmeldenummer: 96941621.3
(22) Anmeldetag: 29.11.1996
(51) Int. Cl.: G01C 21/20, G01S 13/93, G01S 13/86

(54) **Signalverarbeitungsverfahren für ein Fahrzeugnavigationssystem**
Signal processing method for a vehicle navigational system
Procédé de traitement de signaux pour un système de navigation pour véhicules

(30) Priorität: 13.12.1995 DE 19546506
(43) Veröffentlichungstag der Anmeldung: 30.09.1998
(73) Patentinhaber: DaimlerChrysler AG, 70567 Stuttgart (DE)
(72) Erfinder: WANIELIK, Gerd, D-89079 Ulm (DE); RITTER, Werner, D-89077 Ulm (DE)
(86) Internationale Anmeldenummer: EP9605287
(87) Internationale Veröffentlichungsnummer: WO9721982

(56) Entgegenhaltungen:
- GB-A- 2 289 816
- US-A- 5 296 924
- YOUNG E ET AL: "Improved obstacle detection by sensor fusion" , IEE COLLOQUIUM ON 'PROMETHEUS AND DRIVE' (DIGEST NO.172), LONDON, UK, 15 OCT. 1992 , 1992, LONDON, UK, IEE, UK, PAGE(S) 2/1 - 6 XP000647205 siehe Seite 5 - Seite 6
- PATENT ABSTRACTS OF JAPAN vol. 095, no. 008, 29.September 1995 & JP 07 125567 A (MITSUBISHI MOTORS CORP), 16.Mai 1995,
- HARVEY R L ET AL: "Biological vision models for sensor fusion" , FIRST IEEE CONFERENCE ON CONTROL APPLICATIONS (CAT.NO.92CH3000-7), DAYTON, OH, USA, 13-16 SEPT. 1992 , ISBN 0-7803-0047-5, 1992, NEW YORK, NY, USA, IEEE, USA, PAGE(S) 392 - 397 VOL.1 XP000647204 siehe Seite 394, Spalte 2 - Seite 395, Spalte 1

## Beschreibung

Die Erfindung betrifft ein Signalverarbeitungsverfahren für ein Fahrzeug-Navigationssystem nach dem Oberbegriff des Patentanspruch 1.

Fahrzeug-Navigationssysteme mit Einsatz unterschiedlicher Techniken und Anwendungsbeispiele sind beispielsweise angegeben in "Kraftfahrzeugtechnik" 1993, Abschnitt Technik-Lexikon. In Automobiltechnische Zeitschrift 90 (1988), S. 429-436 ist ein Convoy-Leitverkehr als Anwendung für Kfz-Navigationssysteme beschrieben.

Aus einer Veröffentlichung von E. Young et al. in IEE Colloquium on "Prometheus and Drive" (Digest no. 172), London, UK, 15.10.92 ist ein Fahrzeug-Navigationssystem mit einer Sensorfusion aus Radarsensor und Videokamera bekannt. Die Messungen des Radarsensors und der Videokamera werden unabhängig voneinander durchgeführt und anschließend durch die Datenfusion ein gemeinsamer Satz von Messungen und deren Wahrscheinlichkeitsverteilungen erstellt.

Für den Einsatz einer Bildsensoranordnung, z.B. als Videokamera, mit automatischer Bildauswertung zur Detektion und Klassifikation von Form, Farbe, Richtung, Aspektwinkel etc. interessierender Objekte und der Komplexität der beobachteten Szene ist der Verarbeitungsaufwand in einer zugeordneten Bild-Auswerteeinrichtung hoch.

Der vorliegenden Erfindung liegt die Aufgabe zugrunde, ein Signalverarbeitungsverfahren für ein Fahrzeug-Navigationssystem anzugeben, das mit hoher Effizienz zuverlässige Umgebungsinformationen liefert.

Die Erfindung ist im Patentanspruch 1 beschrieben. Die Unteransprüche enthalten vorteilhafte Ausgestaltungen und Weiterbildungen der Erfindung.

Das Fahrzeug-Navigationssystem umfaßt zum einen eine Radaranordnung mit zugehörigen Radar-Auswerteeinrichtungen, welche aus den Radar-Empfangssignalen erste Zielparameter ableiten, und zum anderen eine Bildsensoranordnung mit zugehörigen Bild-Auswerteeinrichtungen, welche aus den Bildsensor-Empfangssignalen zweite Zielparameter ableiten. Weitere Sensoranordnungen können ergänzend hinzugefügt werden.

Die Radaranordnung und die Bildsensoranordnung überwachen einen gemeinsamen Raumwinkelbereich. Die Radaranordnung zeigt dabei ein erstes Raumwinkel-Auffösungsvenmögen von z.B. 8-32 Winkelschritten zu je ≥ 0.75 Grad im Azimut und 1-8 Winkelschritte zu je ≥ 3 Grad in der Elevation. Derselbe Winkelbereich ist bei der Bildsensoranordnung mit einem zweiten im Regelfall höheren Raumwinkel-Auflösungsvermögen auf ein Bildpunktarray von 512 x 512 Pixeln abgebildet. Jedem Raumwinkel-Rasterelement der Radaranordnung ist damit geometrisch jeweils eine Mehrzahl von Bildpixeln der Bildsensoranordnung zuzuordnen. Die Weiterverarbeitung der Zielparameter in einer Datenfusionseinrichtung erfolgt vorzugsweise in der Raumwinkelauflösung der Bildsensoranordung, wobei für pixelweise Zusammenführung von Parameterwerten die Werte aus einem Radar-Rasterelement jeweils in alle zugeordneten Pixel übernommen wird. Für den Fall, daß in einer Stufe der Signalverarbeitung von der hohen zweiten Raumwinkel-Auflösung der Bildsensor-Anordnung zu einer geringeren Raumwinkel-Auflösung übergegangen wird, können die Werte von dann zusammenzufassenden Pixeln vorzugsweise durch statistische Verfahren wie Mittelwertbildung, Median etc. in neue Werte überführt werden. Für die geometrische Zuordnung verschiedener Raumwinkel-Auflösungen ist erforderlichenfalls eine Vorverarbeitung wie z.B. Ausgleich von Bildverzerrungen und Parallelaxenfehlern, Höhenkorrektur, Gitterabgleich etc. durchzuführen.

Für die Radaranordnung und die Bildsensoranordnung können an sich bekannte Anordnungen eingesetzt werden. Die Raumwinkel-Auflösung kann bei der Radaranordnung in an sich bekannter Weise durch Schwenken eines Richtdiagramms oder mittels eines Sensorarrays mit festem Diagrammfächer oder Zwischenformen erzielt werden. Bevorzugt wird eine Anordnung mit einem Sensorarray und einer fokussierenden Vorrichtung wie Spiegel oder Linse. Solche Radaranordnungen sind auch als bildgebende Radaranordnungen bezeichnet. Für die Bildsensoranordnung kommt insbesondere eine Kamera, evtl. in Verbindung mit Beleuchtungseinrichtungen, insbesondere Infrarot-Laserbeleuchtung zum Einsatz.

Die Verarbeitung der Empfangssignale und der daraus in verschiedenen Stadien der Auswertung abgeleiteten Daten erfolgt bevorzugt digital unter Verwendung eines oder mehrerer Prozessoren.

Die Verknüpfung der aus den Empfangssignalen abgeleiteten Zielparameter kann an verschiedenen Stellen des Auswerteprozesses erfolgen, woraus je nach gewählter Variante die für die Auswertung anfallenden Aufgaben auf die Radar-Auswerteeinrichtungen und die Bild-Auswerteeinrichtungen andererseits verschieden verteilt sind.

Eine erste vorteilhafte Ausführungsform sieht vor, daß die Verknüpfung auf niedriger Verarbeitungsebene mit nur geringem Auswerteeinsatz in den Auswerteeinrichtungen erfolgt, indem z.B. die Radar-Auswerteeinrichtungen aus den Radar-Empfangssignalen in der für die Radaranordnung gegebenen Raumwinkelauflösung Relativgeschwindigkeit und Entfernung sowie ggf. weitere Größen wie Depolarisationsgrad etc. von detektierten Zielen, die Bild-Auswerteeinrichtungen pixelweise Helligkeit und ggf. Farbe als Zielparameter bestimmen und die so bestimmten Größen in der Datenfusionseinrichtung in der zur weiteren Verarbeitung vorgesehenen Raumwinkel-Auflösung winkelsegmentweise zusammengefaßt werden, z.B. als Parametervektor mit Komponenten Relativgeschwindigkeit, Entfernung, Helligkeit, Farbe. Diese Parametervektoren dienen dann als verknüpfte Basisdaten für eine Weiterverarbeitung, die insbesondere eine Zielklassifikation z.B. mit Unterscheidung der Klassen Hindernis, vorausfahrendes Fahrzeug, Fahrbahnrand, Verkehrszeichen etc. beinhaltet. Aus der bei der Klassifikation festgestellten Zielklasse können dann in an sich üblicher Weise weitere Maßnahmen abgeleitet werden. Durch die Verknüpfung der Parameter von den getrennten Auswerteeinrichtungen liegt der Klassifikation (oder einer anderen Auswertung) ein umfangreicher und durch die Spezialisierung der verschiedenen Anordnungen auf die einzelnen Parameter präziser Datensatz vor, der eine verläßliche Klassifikation ermöglicht. In der Datenfusionseinrichtung kann gemäß einer vorteilhaften Weiterbildung die weitere Verarbeitung von Parametern aus den Bild-Auswerteeinrichtungen auf die Raumwinkelausschnitte beschränkt werden, in denen von der Radaranordnung Zielechosignale detektiert werden. Somit kann im Regelfall der Aufwand zur Verarbeitung der Empfangssignale der Bildsensoranordnung erheblich verringert werden. Nähere Raumwinkelumgebungen solcher Raumwinkel ausschnitte können mit berücksichtigt werden. Hierdurch kann dem Umstand Rechnung getragen werden, daß sich Radarsignale reflektierende Bereiche und für die Bildanalyse aussagekräftige Bereiche von Objekten häufig nicht genau überdecken, z.B. bei der Fahrbahnranderkennung weiße Streifen auf dem Fahrbahnbelag als deutliches optisches Signal und der weiter entfernt liegende Belagrand als in der Radaranordnung detektierter Rand.

Gemäß einer anderen vorteilhaften Ausführungsform werden die Meßgrößen aus den Empfangssignalen der verschiedenen Anordnungen bereits in den getrennten Auswerteeinrichtungen zu Objekten verknüpft, wofür vorzugsweise Nachbarschaftsvergleiche über die ungefähre Gleichheit von Meßgrößen angestellt und zusammenhängende Gebiete gebildet werden. Von den getrennten Auswerteeinrichtungen werden dann bevorzugt reduzierte Datensätze als Parameter der Objekte wie z.B. Schwerpunkt, mittlere Relativgeschwindigkeit, betroffener Raumwinkelausschnitt etc. an die Datenfusionseinrichtung weitergegeben, welche richtungsselektiv die Objektparameter verknüpft. Die Verknüpfung kann dabei auch ergeben, daß einem von den einen Auswerteeinrichtungen, z.B. Radar-Auswerteeinrichtungen, bestimmten Objekt keine Objekte oder mehrere Objekte der anderen Auswerteeinrichtungen, z.B. Bild-Auswerteeinrichtungen, zuzuordnen sind. Auch in dieser Ausführungsform kann die Objektbildung in den rechenintensiveren Bild-Auswerteeinrichtungen nach Maßgabe der Zielentdeckungen in den Radar-Auswerteeinrichtungen auf bestimmte Raumwinkelausschnitte beschränkt werden.

Eine weitere vorteilhafte Ausführungsform sieht vor, bereits in den getrennten Auswerteeinrichtungen ein Vorklassifikation von Zielen allein aufgrund der Empfangssignale der jeweils zugeordneten Anordnung durchzuführen und die Vorklassifizierungsergebnisse in der Datenfusionseinrichtung vorzugsweise wiederum richtungsselektiv zu verknüpfen. Vorteilhafterweise werden die Vorklassifizierungsergebnisse bei der Verknüpfung zu einer abschließenden Klassenzuordnung mit einem Gütemaß gewichtet, welches eine Glaubwürdigkeit der in verschiedenen Klassen vorgenommenen Schätzung wiedergibt. Hierdurch kann z.B. berücksichtigt werden, daß eine bestimmte Zielklasse mittels der Radaranordnung wesentlich zuverlässiger erkannt wird als mittels der Bildsensoranordnung. Hierzu können z.B. die in der Vorklassifikation zu den verschiedenen Klassen ermittelten Wahrscheinlichkeiten mit anordnungs- und klassenspezifisch vorgegebenen Faktoren bei der Verknüpfung multipliziert werden. Gemäß einer anderen Variante können die Vorklassifikationsergebnisse der jeweiligen Auswerteeinrichtung nach der statistischen Verteilung der Wahrscheinlichkeiten in ihrer Glaubwürdigkeit bevorzugt werden, z.B. in der Art, daß bei annähernder Gleichverteilung der Wahrscheinlichkeiten zu den verschiedenen Zielklassen eine insgesamt geringe Glaubwürdigkeit, z.B. in Form eines niedrigen multiplikativen Faktors, in der Verknüpfung der Vorklassifikationen angenommen wird. Eine hohe Glaubwürdigkeit z.B. in Form eines hohen Faktors würde dann bei starker Ungleichverteilung angenommen. Die genannten Varianten zur Beurteilung der Glaubwürdigkeit der Vorklassifikationen können auch kombiniert angewandt werden.

Die in den vorstehenden Beispielen genannten Auswerteeinrichtungen und die Datenfusionseinrichtung sind nicht notwendigerweise körperlich separate Einheiten, sondern können auch in einer ausreichend leistungsfähigen digitalen Signalverarbeitungseinheit in Form von Untereinheiten oder programmierten Steuerbefehlen realisiert sein.

Die Erfindung ist besonders vorteilhaft einsetzbar als Navigationssystem in der Straßenverkehrsleittechnik und in der Rollfeldführung auf Flugplätzen. Für den letztgenannten Fall können sowohl Servicefahrzeuge als auch dem Rollfeld bewegte Flugzeuge mit einem solchen Navigationssystem ausgerüstet sein.

## Patentansprüche

1. Signalverarbeitungsverfahren für ein Fahrzeug-Navigationssystem mit einer Radaranordnung und einer Bildsensoranordnung, die im wesentlichen gleiche Raumwinkelbereiche überwachen, bei welchen aus den Empfangssignalen der Radaranordnung einerseits und der Bildsensoranordnung anderseits jeweils Zielparameter in vorgegebenen Raumwinkel-Auflösungsvermögen ermittelt und die ermittelten Zielparameter aus einander entsprechenden Raumwinkelbereichen durch Datenfusion verknüpft werden,
dadurch gekennzeichnet,
- daß bei der Auswertung der Empfangssignale der Radar- und Bildsensoranordnungen durch geeignete Verknüpfungen der Daten reduzierte Datensätze und daraus abgeleitete Zielparameter erzeugt werden, und
- daß bei der Auswertung der Empfangssignale der Radaranordnungen Raumwinkelausschnitte für die Bildauswertung vorgegeben werden und die Empfangssignale der Bildsensoranordnungen lediglich aus diesen vorgegebenen Raumwinkelausschnitten ausgewertet werden.

2. Signalverarbeitungsverfahren nach Anspruch 1, dadurch gekennzeichnet, daß bei der Datenfusion eine Zielklassifikation durchgeführt wird.

3. Signalverarbeitungsverfahren nach Anspruch 1 und 2, dadurch gekennzeichnet, daß bei der Auswertung der Empfangssignale in der Radar- und Bildsensoranordnung jeweils getrennt eine Ziel-Vorklassifikation durchgeführt wird und die verschiedenen Ziel-Vorklassifikationen bei der Datenfusion verknüpft werden.

4. Signalverarbeitungsverfahren nach Anspruch 3, dadurch gekennzeichnet,daß die Ziel-Vorklassifizierungsergebnisse bei der Datenfusion mit einem Gütemaß gewichtet werden.

5. Signalverarbeitungsverfahren nach einem der vorherigen Ansprüche, dadurch gekennzeichnet, daß bei der Radar-und Bild-Auswertung der Empfangssignale jeweils getrennt Zielparameter abgeleitet werden und bei der Datenfusion die getrennt abgeleiteten Zielparameter in einem gemeinsamen Parametervektor zusammengefaßt werden.

6. Signalverarbeitungsverfahren nach einem der Ansprüche 1 bis 5, dadurch gekennzeichnet, daß bei der Radar-Auswertung der Empfangssignale Raumwinkelausschnitte mit Zielmeldungen vorgegeben werden und bei der Bild-Auswertung nur die Empfangssignale der Bildsensoranordnung aus diesen Raumwinkelausschnitten ausgewertet werden.

## Claims

1. Signal processing method for a vehicle navigation system having a radar arrangement and an image sensor arrangement which monitor essentially identical solid angle ranges and in the case of which respective target parameters are ascertained in prescribed solid angle resolutions from the received signals from the radar arrangement, on the one hand, and from the image sensor arrangement, on the other hand, and the target parameters ascertained from mutually corresponding solid angle ranges are linked by means of data fusion,
characterized
- in that data records reduced as a result of suitable linking operations for the data, and target parameters derived from said data records, are produced when the received signals from the radar and image sensor arrangements are evaluated, and
- in that solid angle portions are prescribed for image evaluation when the received signals from the radar arrangements are evaluated, and the received signals from the image sensor arrangements are evaluated only from these prescribed solid angle portions.

2. Signal processing method according to Claim 1, characterized in that a target classification operation is carried out during the data fusion.

3. Signal processing method according to Claims 1 and 2, characterized in that, during evaluation of the received signals in the radar and image sensor arrangements, a respectively separate preliminary target classification operation is carried out and the various preliminary target classifications are linked during the data fusion.

4. Signal processing method according to Claim 3, characterized in that the preliminary target classification results are weighted during the data fusion using a quality criterion.

5. Signal processing method according to one of the preceding claims, characterized in that respectively separate target parameters are derived during the radar and image evaluation of the received signals, and during the data fusion the separately derived target parameters are combined to form a joint parameter vector.

6. Signal processing method according to Claims 1 to 5, characterized in that solid angle portions are prescribed using target messages during the radar evaluation of the received signals, and during the image evaluation only the received signals from the image sensor arrangement are evaluated from these solid angle portions.

## Revendications

1. Procédé de traitement de signal pour un système de navigation de véhicule avec un arrangement radar et un arrangement capteur d'image qui contrôlent essentiellement des champs angulaires égaux, dans lesquels, à partir des signaux de réception de l'arrangement radar d'une part et de l'arrangement capteur d'image d'autre part, on détermine respectivement des paramètres de cible avec les capacités de résolution prédéfinies dans les champs angulaires et on relie les paramètres de cible déterminés à partir des champs angulaires se correspondant mutuellement par fusion des données, caractérisé
- en ce que lors de l'exploitation des signaux de réception des arrangements radar et capteur d'image, on génère des quantités de données réduites et des paramètres de cible qui en découlent par des liaisons appropriées entre les données, et
- en ce que lors de l'exploitation des signaux de réception des arrangements radar, on prédéfinit des sections du champ angulaire pour l'exploitation de l'image et les signaux de réception des arrangements capteur d'image ne sont exploités qu'à partir de ces sections prédéfinies du champ angulaire.

2. Procédé de traitement de signal selon la revendication 1, caractérisé en ce que lors de la fusion des données, on réalise une classification des cibles.

3. Procédé de traitement de signal selon les revendications 1 et 2, caractérisé en ce que lors de l'exploitation des signaux de réception dans l'arrangement radar et capteur d'image, on réalise respectivement de manière séparée, une pré-classification des cibles et, lors de la fusion des données, on relie les différentes pré-classifications des cibles.

4. Procédé de traitement de signal selon la revendication 3, caractérisé en ce que les résultats de la pré-classification des cibles sont pondérés par un critère de qualité lors de la fusion des données.

5. Procédé de traitement de signal selon l'une des revendications précédentes, caractérisé en ce que lors de l'exploitation des signaux de réception radar et image, on déduit respectivement de manière séparée, des paramètres de cible et, lors de la fusion des données, on regroupe les paramètres de cible déduits séparément dans un vecteur de paramètres commun.

6. Procédé de traitement de signal selon l'une des revendications 1 à 5, caractérisé en ce que lors de l'exploitation des signaux de réception radar, des sections du champ angulaire sont prédéfinies avec des indications de cible et, lors de l'exploitation de l'image, seuls les signaux de réception de l'arrangement capteur d'image provenant de ces sections du champ angulaire sont exploités.
